Europäisches Patentamt

European Patent Office

Office européen des brevets

(11) Veröffentlichungsnummer: **0 616 129 A1**

## (12) EUROPÄISCHE PATENTANMELDUNG

(21) Anmeldenummer: **94104021.4**

(22) Anmeldetag: **15.03.94**

(51) Int. Cl.5: **F04B 49/06**

(30) Priorität: **15.03.93 DE 4308198**

(43) Veröffentlichungstag der Anmeldung:
**21.09.94 Patentblatt 94/38**

(84) Benannte Vertragsstaaten:
**DE FR GB IT**

(71) Anmelder: **MANNESMANN REXROTH GmbH**
**Postfach 340**
**D-97813 Lohr (DE)**

(72) Erfinder: **Kordak, Rolf**
**Steinweg 4**
**D-97816 Lohr/Main (DE)**

(74) Vertreter: **Wagner, Karl H. et al**
**WAGNER & GEYER**
**Patentanwälte**
**Gewürzmühlstrasse 5**
**D-80538 München (DE)**

(54) **Drehmomentregelung über Schwenkwinkel bzw. Exzentrizität bei hydrostatischen Maschinen mit axialer und radialer Kolbenanordnung.**

(57) Schaltungsanordnung zur Drehmomentsteuerung einer hydrostatischen Maschine an einem Hydrauliksystem mit eingeprägtem Betriebsdruck, mit einem mit dem Schwenkwinkel bzw. der Exzentrizität gekoppelten Geber zur Darstellung des Hubvolumenistwertes der Maschine, und mit einem willkürlich einstellbaren Drehmomentsollwert, der ein Regelsignal zur Ansteuerung eines Ventils zum betätigen eines Stellgliedes erzeugt, welches das das Drehmoment bestimmende Hubvolumen der Maschine unter Berücksichtigung der Betriebsparameter wie Druck, Drehzahl und Temperatur verändert, wobei folgendes vorgesehen ist der Schwenkwinkel (die Exzentrizität) wird analog oder digital gemessen und der Sollwert des Schwenkwinkels (oder der Exzentrizität) $\alpha = \frac{M}{P}$ wird errechnet (analoge Lösung), oder aber die ausgegebene Spannung für die Schwenkwinkelvorgabe wird aus "vorher" festgelegten Meßwerten (digitale Lösung) bestimmt.

FIG.4

Rank Xerox (UK) Business Services
(3.10/3.09/3.3.4)

Die Erfindung bezieht sich auf eine Schaltungsanordnung zur Drehmomentsteuerung einer hydrostatischen Maschineneinheit. Insbesondere bezieht sich die Erfindung auf eine derartige Anordnung zur Verwendung in einem hochdynamischen Prüfstand für Brennkraftmaschinen.

Es ist bereits bekannt die technischen Möglichkeiten der Sekundärregelung im dynamischen Bereich bei einem Motorenprüfstand einzusetzen. Vergleiche hierzu den Fall der reinen Drehzahlregelung gemäß "Der Hydrauliktrainer" Band 6, Seiten 59 bis 61, herausgegeben von der Firma Mannesmann Rexroth GmbH, Lohr am Main.

Bei der Aufgabenstellung hinsichtlich dieses bekannten Prüfstandes kam es nicht nur darauf an, die technischen Größen wie Druck, Volumenstrom, Temperatur, Kraft, Geschwindigkeit, Beschleunigung und Gaszusammensetzung zu messen und auszuwerten, sondern es sollten auch dynamische Dauererprobungen durchgeführt werden, wobei die Belastungen automatisch geändert und Bedingungen geschaffen werden, wie sie bei der Straßenerprobung auftreten. Charakteristisch für diesen Prüfbetrieb ist die dynamische Steuerung von Drehzahl und Drehmoment und die Messung dieser Größen. Im Einzelnen wird in der geannnten Druckschrift eine Prüfzelle mit einer Belastungsmaschine dargestellt, und zwar bestehend aus Verteilergetriebe mit zwei drehzahlgeregelten Axialkolbenmaschinen in Parallelanordnung. Der Prüfling ist dabei unter Zwischenschaltung einer Drehmomentmeßnabe angekuppelt. Die Verwendung einer Drehmomentmeßnabe hat allerdings den Nachteil, daß diese verhältnismäßig teuer ist. Ferner ist sie nicht dynamisch belastbar, sie muß frühzeitig ersetzt werden, beispielsweise nach einer Betriebszeit von 500 Stunden. Wenn eine Drehmomentmeßnabe während eines Versuchs ausfällt, muß der Versuch von neuem gefahren werden was offensichtlich unerwünscht ist. Auf die Erwähnung des Begriffs "eingeprägter Betriebsdruck" auf Seite 15, linke Spalte dieser Literaturstelle sei hingewiesen.

Es ist ferner in der Kraftfahrzeugbranche Stand der Technik, bei Prüfständen für Brennkraftmaschinen stromrichtergespeiste Gleichstromnebenschlußmaschinen einzusetzen. Dabei wird die Energie der Brennkraftmaschinen vom Elektromotor aufgenommen und mittels Zerhacker ins Drehstromnetz eingespeist. Der steuerungstechnische Aufwand ist dabei beträchtlich. Wegen der hohen Massenträgheitsmomente läßt die Dynamik einer solchen Prüfeinrichtung manche Wünsche offen. Auch der vorgeschlagene Einsatz von stromrichtergespeisten Drehstrommaschinen, deren Drehzahl-Drehmoment-Charakterisiken denjenigen von Gleichstromnebenschlußmaschinen ähnlich sind, kann hier kaum Ahilfe schaffen, auch wenn man berücksichtigt, daß die Massenträgheitsmomente reduziert werden konnten. Obwohl also die rein elektrische Lösungsmöglichkeit auf eine Drehmomentmeßnabe verzichten kann, weil das Drehmoment aus der Stromaufnahme oder Stromabgabe errechnet wird, ergeben sich die oben genannten Nachteile.

Zum Stand der Technik sei noch auf die DE 28 48 595 A1 hingewiesen, die ein Verfahren und eine Vorrichtung zur Regelung des Abtriebsdrehmoments eines Getriebes beschreibt, bei dem zwei, ein primärer und ein sekundärer Hydrostat volumenstromgekoppelt sind. Die Anwendung dieser Vorrichtung erfordert einen Eingriff am primärseitigen Hydrostaten zum Zwecke der $\Delta$ p-Änderung für die Steuerung des Drehmoments. Dies bedeutet, daß die durch diese Vorrichtung gebildete hydraulische Feder sich nachteilig auf die Dynamik dieser Vorrichtung auswirkt.

Der vorliegenden Erfindung liegt die Aufgabe zugrunde die Nachteile des Standes der Technik zu vermeiden. Insbesondere beabsichtigt die vorliegende Erfindung ein Verfahren und eine Vorrichtung vorzusehen zur Drehmomentsteuerung einer hydrostatischen Maschineneiheit, wie sie insbesondere bei hochdynamischen Prüfständen für Brennkraftmaschinen einsetzbar ist.

Die Erfindung geht von der Erkenntinis aus, daß zur Vermeidung einer Meßnabe bei einer hydrostatischen Lösungsmöglichkeit und einem System mit eingeprägtem Druck das Drehmoment in anderer Weise bestimmt werden müßte. Nachdem das Drehmoment der Druckdifferenz und dem Hubvolumen einer hydrostatischen Maschineneinheit proportional ist wird vorgeschlagen auf die das Hubvolumen der Maschinenheit representierenden Größen wie den Schwenkwinkel bzw. die Exzentrizität zurückzugreifen, um das Drehmoment zu ermitteln. Die Drehzahl kann dabei in einfacher Weise beispielsweise. durch eine Tachomaschine bestimmt werden. Das heißt also, daß die für die vorliegende Erfindung erforderlichen Größen bei Verwendung des Sekundärregelungsprinzips bereits vorliegen, sodaß erfindungsgemäß insbesondere eine elektronische Steuerschaltung (Regelsignalerzeugungsmittel) vorgesehen werden muß, welche ein Steuersignal erzeugt, um das das Drehmoment der hydrostatischen Maschineneinheit bestimmende Hubvolumen der Maschineneinheit insbesondere unter Berücksichtigung der obengenannten Betriebsparamter zu verändern. Dieses Steuersignal wird durch die Schaltung bei einer analogen Lösung entweder berechnet oder bei einer digitalen Lösung einem Speicher wie z. B. einem EPROM entnommen wo diese Meßwerte zuvor nach ihrer praktischen Ermittlung abgespeichert wurden.

Kurz gesagt sieht also die Erfindung insbesondere eine Schaltungsanordnung zur Drehmomentsteuerung einer hydrostatischen Maschine vor und zwar an einem Hydrauliksystem mit eingeprägtem Betriebsdruck, mit einem mit dem Schwenkwinkel bzw. der Exzentrizität gekoppelten Geber zur Darstellung des Hubvolumenistwertes der Maschine und einem willkürlich einstellbaren Drehmomentsollwert, der ein Regelsignal zur Ansteuerung eines Ventils zum Betätigen eines Stellglieds erzeugt, welches das das Drehmoment bestimmende Hubvolumen der Maschine unter Berücksichtigung der Betriebsparameter wie Druck, Drehzahl und Temperatur verändert, wobei der Schwenkwinkel (die Exzentrizität) analog oder digital gemessen wird und der Sollwert des Schwenkwinkels (der Exzentrizität) $\alpha = \frac{M}{P}$ errechnet wird, oder aber daß die ausgegebene Spannung für die Schwenkwinkelvorgabe aus "vorher" angelegten Meßwerten bestimmt wird. Vorzugsweise ist der Drehmomentsteuerung ein Drehzahlgrenzwert überlagert, der bei einem Fehlverhalten der Maschine nicht überschritten werden kann.

Weitere bevorzugte Ausgestaltungen der Erfindung ergeben sich aus den Ansprüchen und sind in der folgenden Beschreibung von Ausführungsbeispielen anhand der Zeichnung erläutert; in der Zeichnung zeigt:

Fig. 1 ein Blockschaltbild eines bekannten hydrostatischen Prüfstands für Brennkraftmaschinen;

Fig. 1a eine detailierte Darstellung der Fig. 1 und zwar gemäß Bild 54 der eingangs genannten Literaturstelle "Der Hydrauliktrainer", Band 6.

Fig. 2 ein Blockschaltbild eines bekannten auf elektrischer Basis arbeitenden Prüfstandes für Brennkraftmaschinen;

Fig. 3 ein Blockschaltbild eines gemäß der Erfindung ausgebildeten Prüfstandes für Brennkraftmaschinen, zur Darstellung eines ersten Ausführungsbeispiels der Erfindung in einem bevorzugten Anwendungsbereich;

Fig. 4 als zweites Ausführungsbeispiel eine bevorzugte Ausgestaltung des Ausführungsbeispiels der Fig. 3;

Fig. 5 als drittes Ausführungsbeispiel eine weitere Ausgestaltung des Ausführungsbeispiels gemäß Fig. 4;

Fig. 6 als viertes Ausführungsbeislpiel eine weitere Ausgestaltung des Ausführungsbeispiels gemäß Fig. 5;

Fig. 7 als fünftes Ausführungsbeispiel eine weitere Ausgestaltung des Ausführungsbeispiels gemäß Fig. 6;

Fig. 8 Kennlinien

Fig. 9 Kennlinien

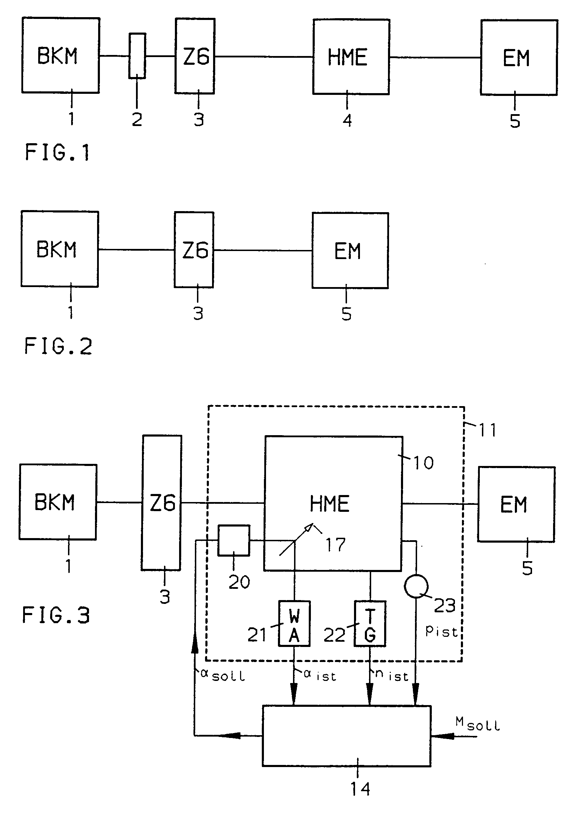

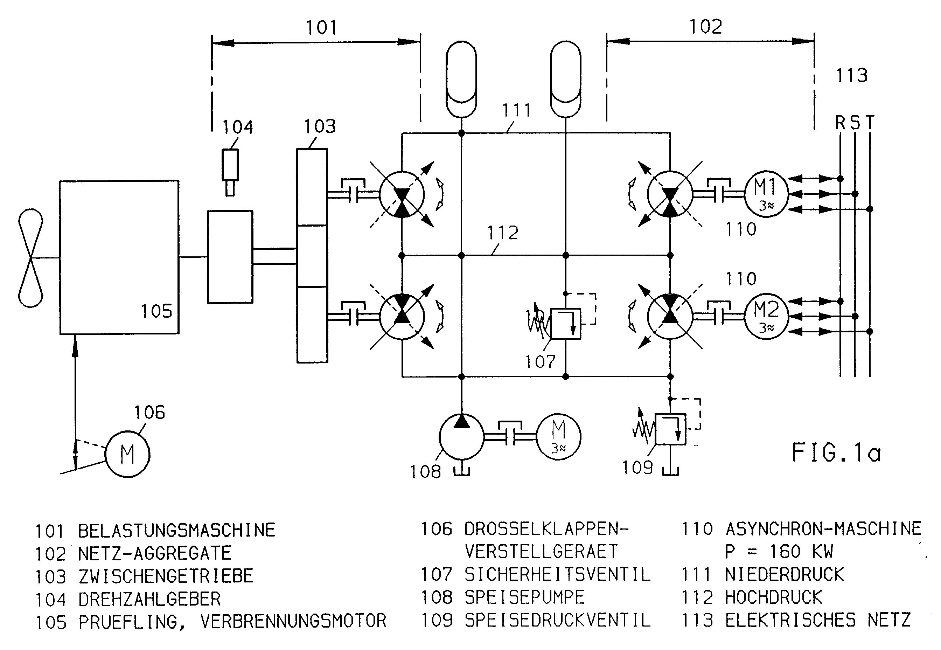

Fig. 1 zeigt schematisch und Fig. 1a im Detail einen Prüfstand für Brennkraftmaschinen. Man sieht eine Brennkraftmaschine 1 die über eine Drehmomentmeßnabe 2 mit einem Zwischengetriebe 3 gekuppelt ist, welches seinerseits mit einer hydrostatischen Maschineneinheit 4 gekuppelt ist, die ihrerseits mit einer elektrischen Maschine 5 in Verbindung steht. Im Einzelnen sind noch in Fig. 1 nicht aber in Fig. 1a gezeigte hydraulische Speichermittel vorgesehen, die die zur Eigenbeschleunigung der Belastungsmaschine 2, 3, 4 erforderliche Energie liefern und diese beim Abremsvorgang wieder abspeichern.

Fig. 1a zeigt Einzelheiten der Fig. 1, wobei hier die folgenden Bezugszeichen verwendet werden:

101 Belastungsmaschine, 102 Netz-Aggregate, 103 Zwischengetriebe, 104 Drehzahlgeber, 105 Prüfling, Verbrennungsmotor, 106 Drosselklappen-Verstllgerät, 107 Sicherheitsventil, 108 Speisepumpe, 109 Speisedruckventil, 110 Asynchron-Maschine P = 160 kW, 111 Niederdruck, 112 Hochdruck, 113 elektrisches Netz.

Fig. 2 zeigt ein Blockschaltbild für eine rein elektrische Lösung, bei der wiederum ähnlich wie in Fig. 1 eine Brennkraftmaschine 1 sowie ein Elektromotor 5 und ein Zwischengetriebe 3 vorgesehen sind, wobei aber hier keine keine Drehmomentmeßnabe erforderlich ist da dasselbe errechnet wird. Die Nachteile einer solchen Anordnung wurden bereits erwähnt.

Fig. 3 zeigt ein Blockschaltbild eines ersten Ausführungsbeispiels der Erfindung. Die Brennkraftmaschine ist wiederum mit 1, das Zwischengetriebe mit 3 und der Elektromotor mit 5 ähnlich wie Fig. 1 bezeichnet.

Eine aus mindestens zwei hydrostatischen Maschinen 10a, 10b bestehende hydrostatische Maschineneinheit 10 liegt zwischen dem Zwischengetriebe 3 und dem Elektromotor 5. Die Maschineneinheit 10 kann ähnlich wie in Fig. 1a ausgebildet sein. Der Vorteil der Verwendung einer Maschineneinheit 10 mit beispielsweise. zwei Sätzen von Pumpen/Motoren wie in Fig. 1a gezeigt hat den Vorteil einer höheren Dynamik gegenüber einer doppelt so großen Einzelmaschine.

Die Maschineneinheit 10 liefert ihre Paramter oder Kenngrößen, insbesondere $\alpha_{ist}$ $n_{ist}$ $p_{ist}$ (ggf. auch noch die Temperatur und andere Werte) an Regelsignalerzeugungsmittel (kurz: eine Steuerschaltung) 14. Der Steuerschaltung 14 wird ein das Solldrehmoment darstellendes Solldrehmomentsignal $M_{soll}$ zugeführt. Basierend auf dem Solldrehmomentsignal sowie den Parametern $\alpha_{ist}$, $N_{ist}$, $P_{ist}$ und ggf. anderen Parametern ermittelt die Steuerschaltung 14 ein Regelsignal $\alpha_{soll}$. Dieses Signal $\alpha_{soll}$ bezeichnet insbesondere bei einer entsprechenden Pumpe den Sollwert des Schwenkwinkels. Bei einer anderen Pummpenart wäre $\alpha_{soll}$ der Exzentrizitätssollwert. Ganz allgemein repräsentiert $\alpha_{soll}$ das aufgrund des jeweils vorliegenden Drehmomentsollwertsignals erforderliche Hubvolumen der Maschineneinheit 10.

Das Schwenkwinkelsollwertsignal $\alpha_{soll}$ wirkt über ein Stellglied 20 auf die Schrägscheibe 17 und verstellt diese entsprechend dem Wert $\alpha_{soll}$. Der Einfachheit halber werden hier die Hubvolumenänderungsmittel 17 einfach als Schrägscheibe bezeichnet, da dies ein typisches Beispiel der Hubvolumenänderungsmittel ist wie sie in einer hydrostatischen Maschineneinheit verwendet werden können. Wie aber bereits erwähnt könnten aber auch mehrere Schrägscheiben vorgesehen sein, und es könnten auch statt der Schrägscheiben andere die Exzentrizität einer Pumpe verändernde Mittel vorgesehen sein.

Das Schwenkwinkelistwertsignal $\alpha_{ist}$ wird durch einen Wegaufnehmer 21 rückgemeldet, der eingangsseitig direkt oder indirekt mit der Schrägscheibe 17 verbunden ist. Ferner ist ein Tachogenerator 22 vorgesehen, der beispielsweise mit der Welle der Maschineneinheit 10 in Verbindung steht und das Istdrehzahlsignal $n_{ist}$ an die Steuerschaltung 14 liefert. Ferner liefert eine Druckmeßdose 23 ein Druckistwertsignal $p_{ist}$ an die Steuerschaltung 14, wobei dieser Druckistwert den eingeprägten Betriebsdruck der Maschineneinheit 10 angibt. Insgesamt wird die Maschineneinheit 10 zusammen mit Stellglied 20, Wegaufnehmer 21, Tachogenerator 22 und Druckmeßdose 23 als hydrostatische Maschinenanordnung 11 bezeichnet.

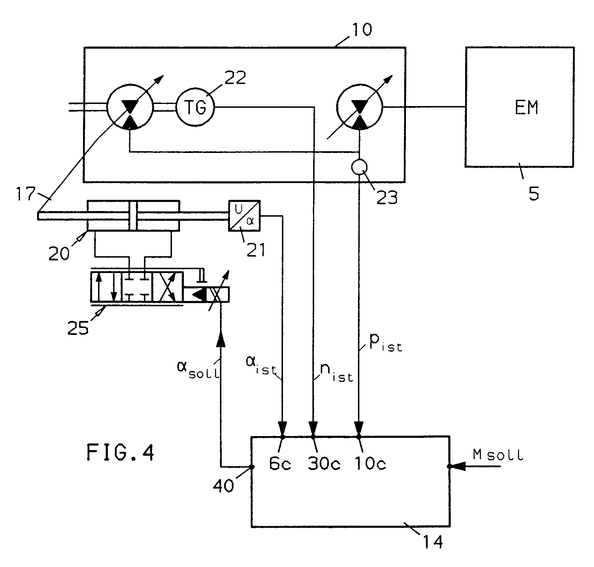

Fig. 4 zeigt ein zweites Ausführungsbeispiel der Erfindung, welches sich von dem gemäß Fig. 3 insbesondere dadurch unterscheidet, daß die Verarbeitung des Schwenkwinkelsollwertsignals $\alpha_{soll}$ und die Herleitung des Schwenkwinkelistwertsignals näher dargestellt sind. Die Maschineneinheit ist wiederum mit 10 bezeichnet, ist aber nur schematisch dargestellt, d. h. es sind vorzugsweise noch andere Bauteile wie beispielsweise Akkumulatoren vorhanden wie sie in Fig. 1a dargestellt sind. Wichtig ist, daß ebenso wie beim Ausführungsbeispiel gemäß Fig. 3 erfindungsgemäß auf eine Drehmomentmeßnabe verzichtet werden kann, da das Drehmoment infolge der Verwendung der Sekundärregelung aus vorhandenden Werten ermittelt werden kann. Was den Begriff Sekundärregelung anlangt, so sei ebenfalls auf den eingangs genannten Band 6 von "Der Hydrauliktrainer" verwiesen, und zwar insbesondere Seiten 13 folgende.

In Fig. 4 sieht man, daß das Stellglied 20 als ein Hydraulikzylinder ausgebildet ist, der dazu dient die Schrägscheibe 17 entsprechend dem Schwenkwinkelsollwertsignal $\alpha_{soll}$ zu verschwenken. Ein Ventil 25, vorzugsweise ein Proportionalventil, beaufschlagt (je nach dem in welchem Quadranten der Betrieb erfolgen soll) die eine oder andere Seite des Hydraulikzylinders 20. Mit dem Kolben des Hydraulikzylinders 20 ist ferner der Wegaufnehmer 21 verbunden, der das Schwenkwinkelistsignal $\alpha_{ist}$ an die Steuerschaltung 14 liefert. Vergleiche dazu auch Bilder 7 und 8 auf Seiten 18 und 19 von Band 6 von "Der Hydrauliktrainer".

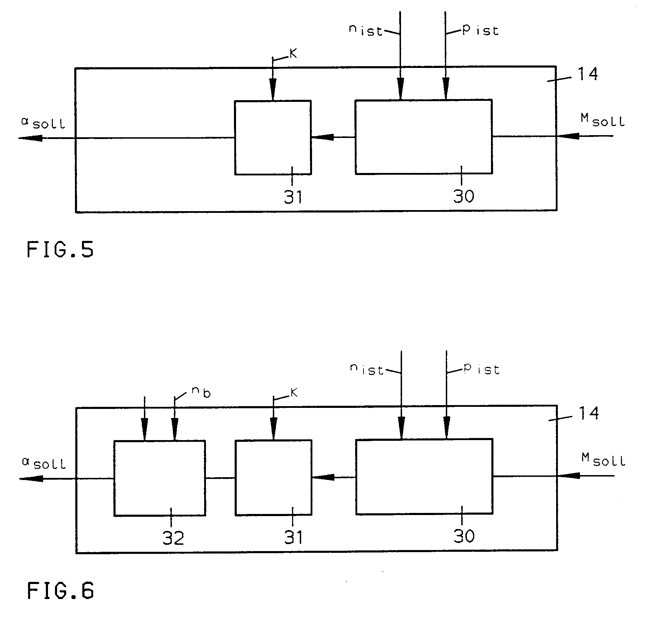

Fig. 5 zeigt als Blockschaltbild ein drittes Ausführungsbeispiel der Erfindung gemäß welchem die Steuerschaltung 14 zunächst entsprechend dem gewünschen Drehmomentsollwertsignal $M_{soll}$ insbesondere basierend auf dem Drehzahlistwertsignal $n_{ist}$ und dem Druckistwertsignal $p_{ist}$ ein Signal erzeugt, welches in einer Korrekturschaltung 31 noch durch ein Korrektursignal K modifiziert wird, um so das Schwenkwinkelsollwertsignal $\alpha_{soll}$ zu erzeugen.

Die ein viertes Ausführungsbeispiel zeigende Schaltung gemäß Fig. 6 unterscheidet sich von der Schaltung gemäß Fig. 5 noch dadurch, daß nach der Korrekturschaltung 31 eine Begrenzungsschaltung 32 vorgesehen ist, welche sicherstellt, daß dann, wenn eine Störung auftritt, eine Begrenzung der Drehzahl aus Sicherheitsgründen erreicht wird.

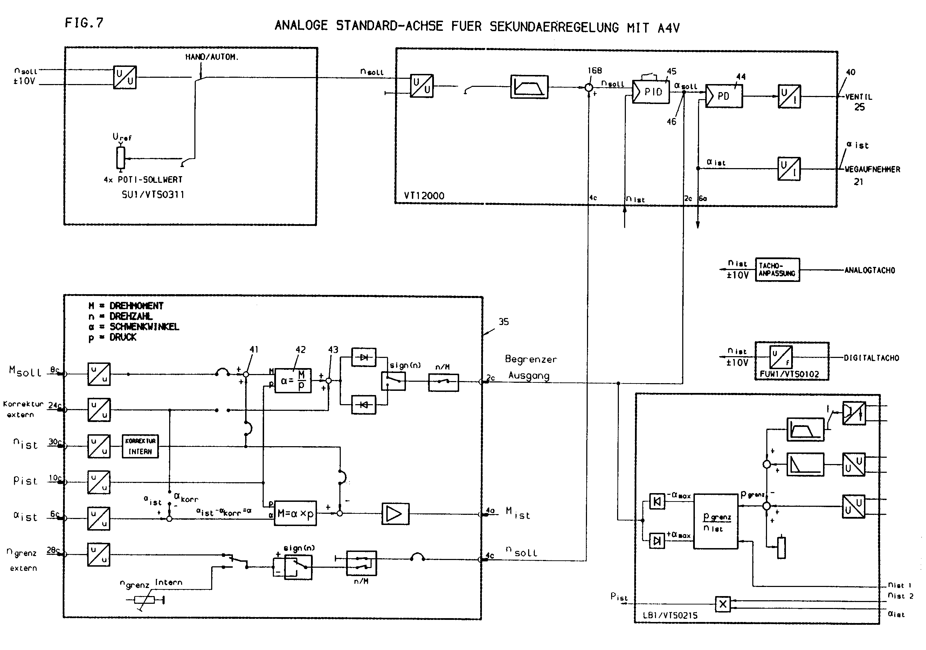

Fig. 7 zeigt ein fünftes Ausführungsbeispiel der Erfindung, wobei hier wiederum eine Steuerschaltung 14 im Einzelnen dargestellt ist. Im dargestellten Fall ist die Steuerschaltung 14 auf Karten realisiert, wobei hier insbesondere die Drehmomentkarte 35 genauer beschrieben wird.

Insbesondere sind die Bezugszeichen 6c, 30c, 10c 8c der Fig. 7 und auch in der Fig. 4 zur Veranschaulichung eingetragen.

Verfolgt man nun einige der Schaltungsverläufe in Fig. 7, so erkennt man, daß das Drehmomentsollwertsignal $M_{soll}$ über einen Verknüpfungspunkt 41 einer Rechenschaltung 42 zugeführt wird. Am Verknüpfungspunkt 41 erfolgt eine Verknüpfung mit Drehzahlistwerten. Am zweiten Eingang der Rechenschaltung 42 liegt ein Druckistwertsignal $p_{ist}$. Die Rechenschaltung 42 ermittelt ein dem gewünschten $M_{soll}$ entsprechendes $\alpha_{soll}$. Dieser Wert wird vorzugsweise einem Verknüpfungspunkt 43 zugeführt, wo gegebenenfalls eine Verknüpfung mit einer Korrekturgröße erfolgt, die über Anschluß 24c angelegt wird. Sodann verläßt das in der genannten Weise aufbereitete Schwenkwinkelsollwertsignal $\alpha_{soll}$ bei 2c die Drehmomentkarte 35 und wird in einem PD-Regler 44 zusammen mit dem Istwertwertsignal $\alpha_{ist}$ verarbeitet, um bei 40 als $\alpha_{soll}$ dem Ventil 25 zugeführt zu werden.

Ein wichtiges Merkmal der Steuerschaltung gemäß Fig. 7 besteht noch im Vorsehen einer Drehzahlbegrenzung. Der gewünschte Grenzwert für die Drehzahl wird dabei in die Drehmomentkarte 35 bei 28 eingegeben und bei 4c tritt ein Drehzahlsollwert $n_{soll}$ entsprechend der gewünschten Drehzahlbegrenzung aus. Dieser Wert $n_{soll}$ liegt in der gezeigten Weise über einen Verknüpfungspunkt am einen Eingang eines PID-Reglers 45 an, an dessen anderem Eingang der Drehzahlistwert $n_{ist}$ liegt. Wenn ein Störfall vorliegt, so wird am Verknüpfungspunkt 46 durch den PID-Regler 45 das Signal $\alpha_{soll}$ unwirksam gemacht.

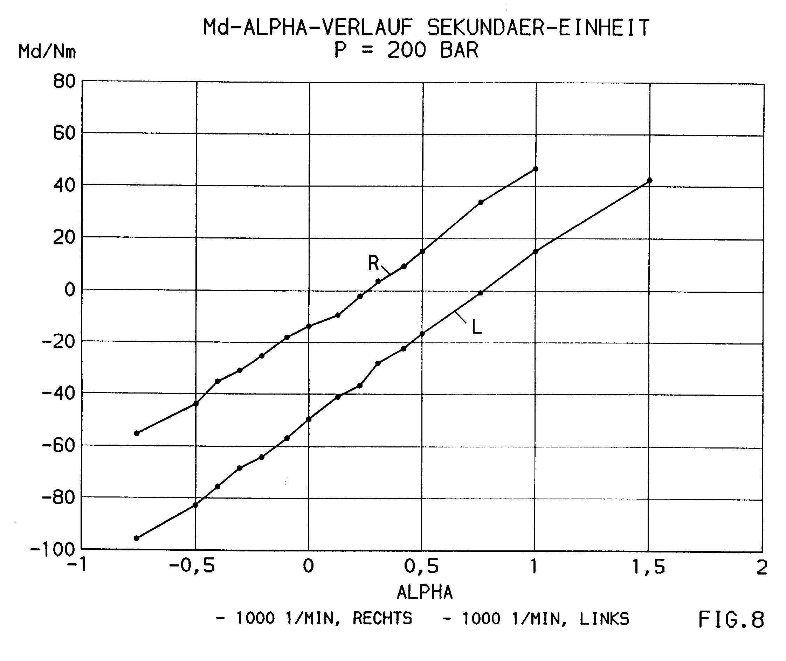

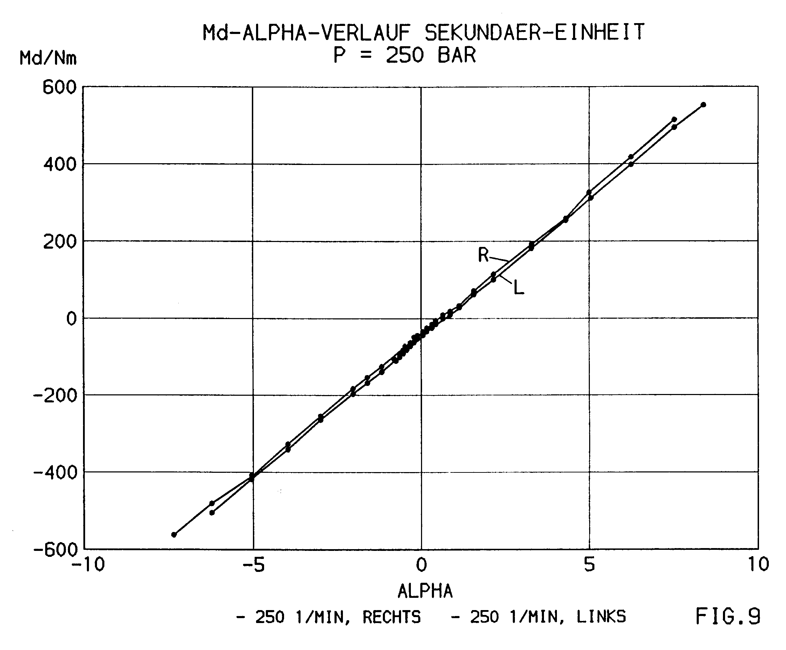

Es wurde bereits oben erwähnt, daß es zum einen möglich ist den Sollwert des Schwenkwinkels (oder den Sollwert der Exzentrizität) zu errechnen, beim Schwenkwinkel beispielsweise gemäß der Formel $\alpha = \frac{M}{P}$. Neben dieser sogenannten analogen Verfahrensweise ist es auch möglich digital zu arbeiten, d. h. die bei 2c in Fig. 7 ausgegebene Spannung für die Schwenkwinkelvorgabe ist aus "vorher" festgelegten Meßwerten bestimmt die für die jeweils verwendete Hydraulikmaschineneinheit charakteristisch sind. Vergleiche dazu die Kennlinien in Fig. 8 und 9 die beispielhaft solche Meßwerte zeigen.

Zur Funktionsbeschreibung sei folgendes ausgeführt. Allgemeine formelmässige Zusammenhänge: Das maximale Drehmoment, das eine Sekundäreinheit aufbringen kann, errechnet sich nach:

$$M_{ab} = \frac{\text{delta } p \times V \times \eta_{ges.}}{20 \times \pi} \quad [\text{ Nm }]$$

dabei ist:

delta p = Druckdifferenz zwischen Eingang und Ausgang
V = geometrisches Fördervolumen [cm³]
$\eta_{ges.}$ = Gesamtwirkungsgrad (ca. 0,8 - 0,95)

Vereinfachung:

$$M_{ab} = \frac{\text{Delta } p \times V_{max} \times \alpha/\alpha_{max}}{62,8} \quad [\text{Nm}]$$

wobei:

$\alpha$ = Schwenkwinkel der Sekundäreinheit $\alpha_{max.}$ = ± 15° ≙ ± 10.0 V
$\alpha/\alpha_{max.}$ = ± (0.0 ... 1.0) ≙ (0 V - ± 10.0 V)

Drehmomentermittlung:

Durch eine analoge Rechenschaltung 50 wird der Schwenkwinkelistwert (6c -> 6a) mit dem Druckistwert (10c -> 10a) und einem Korrekturwert verknüpft. Der Korrekturwert wird dabei entweder durch eine auf der Grundkarte befindliche analoge Rechenschaltung in Abhängigkeit der Nenngröße der gewählten Sekundäreinheit und der aktuellen Drehzahl gebildet, oder durch eine zusätzliche digitale Korrekturwertkarte in Abhängigkeit von Drehzahl, Druck und Temperatur je nach vorgewählter Nenngröße aus einem Kennlinienfeld ausgelesen. Der Korrekturwert stellt dabei den von diesen Größen abhängigen Schwenkwinkel dar, der im motorischen und generatorischen Betrieb zusätzlich notwendig ist, um die Verluste in der Einheit 10 auszugleichen und das Drehmoment konstant zu halten.

Wird die Drehmomentkarte 35 im motorischen Betrieb zur Drehmomentermittlung und -anzeige verwendet, so wird dieser Korrekturwert vom gemessenen Schwenkwinkel subtrahiert und dann das tatsächlich wirkende Drehmoment durch multiplikative Verknüpfung mit dem gemessenen Druckwert errechnet und über einen kurzschlußfesten Verstärker an 4a ausgegeben.

Befindet sich die Einheit 10 im generatorischen Betrieb, so wird dieser Korrekturwert zum gemessenen Schwenkwinkel addiert, da der Korrekturwert nun im Sinne eines zusätzlichen Drehmomentes wirkt.

Drehmomentsteuerung:

Eine weitere besonders bevorzugte Möglichkeit der Drehmomentkarte 35 ist die elektronische Konstanthaltung eines vorgewählten Drehmomentes durch Beeinflussung des Schwenkwinkelsollwertes unter Berücksichtigung der systemabhängigen Korrekturwerte. Der Korrekturwert wird dabei wie bei der Drehmomentermittlung gebildet.

Wird die Drehmomentkarte 35 im motorischen Betrieb zur Drehmomentsteuerung verwendet, so wird der Korrekturwert zum errechneten Sollschwenkwinkel, welcher sich aus dem Solldrehmoment und dem Istdruck ergibt, addiert, und mit dem sich ergebenden analogen Spannungswert über eine Begrenzerschaltung der Schwenkwinkelregelerausgang der Sekundärregel-elektronik VT 12000 über den Anschluß 2c angesteuert.

Bei der Ermittlung des Drehmomentes wird auch berücksichtigt, ob sich die Einheit im motorischen oder generatorischen Betrieb befindet.

Drehmomentregelung und Drehmomentsteuerung:

Über eine karteninterne Begrenzerschaltung kann in allen Betriebszuständen die Maximaldrehzahl getrennt für links und rechtsdrehend vorgegeben werden, wahlweise mit internen Sollwerttrimmern oder extern über Differenzverstärkereingänge. Ein "Durchgehen" des Antriebes über die eingestellte Maximaldrehzahl hinaus ist bei Verwendung mit VT 12000 nicht möglich.

Zusammenfassend kann man also sagen, daß die handelsüblichen Drehmomentmeßnaben im allgemeinen lediglich für statische Messungen geeignet sind, während es bei hochdynamischen Messungen in kurzer Zeit zu Ausfällen kommt. Die elektrische Antriebstechnik hat sich auf diese Tatsache eingestellt. Bei der gependelten Gleichstrommaschine wird das Drehmoment mittels Kraftmeßdose gemessen. Dabei wird der Einfluß der elektrischen Kabel auf die Meßung als konstant angenommen. Bei Gleichstrommaschinen und stromrichtergespeisten Drehstrommaschinen wird der drehzahlabhängige Strombedarf über eine Tachomaschine ermittelt und der Gesamtstrom gemessen. Aus dem Differenzstrom wird das Drehmoment errechnet. Dieses Verfahren wird als hochgenau dargstellt. Wegen der großen Massenträgheitsmomente ist namentlich bei dynamischen Vorgängen das mechanische Drehmoment an der Welle nur schwer vom Drehmoment im Luftspalt abzugrenzen. Vergleicht man eine geregelte elektrische Achse von 100 kW bezüglich der Drehzahländerung pro Zeiteinheit von etwa 12000 1/min/s mit einer geregelten hydrostatischen Achse von ca. 80.000 1/min/s, so treten die gleichen Probleme in kürzeren Zeiten auf. Es bestand daher eine zwingende Notwendigkeit, nach Möglichkeiten der Drehmomentregelung zu suchen, die keine Drehmomentmeßnabe benötigen und bei hinreichender Genauigkeit preisgünstig sind.

Die gependelte hydrostatische Maschine benötigt für die Ölführung eine aufwendige Drehdurchführung, sie arbeitet wegen der hohen Reibungskräfte ungenau.

Einfacher läßt sich also wie oben erläutert das Drehmoment über Druck und Schwenkwinkel

$$Md = \Delta p \cdot \alpha$$

bestimmen.

Bei sekundärgeregelten Antrieben handelt es sich um ein reine Drehzahlregelung. Das System ist zweifach integral. Zur Stabilisierung wird der Schwenkwinkel elektrisch in einer Kaskade zurückgeführt. Eingesetzt werden induktive Wegaufnehmer, Differential-Transformator-Wegaufnehmer, die im Lecköraum der Einheiten angeordnet sind, bzw. druckfeste induktive Wegaufnehmer im Hochdruckraum der Kolben wegen der größeren Auflösung. Diese Wegaufnehmer werden auch bei konventionellen primärgeregelten bzw. gesteuerten Maschinen eingesetzt. Erfindungsgemäß erfolgt die Bestimmung des Drehmomentes über eine Wegrückführung des Verstellzylinders 20 im Niederdruck- oder Hochdruckbereich unter Berücksichtigung des Betriebsdruckes mit der Drehzahl als Parameter. Der Weg des Verstellzylinders 20 bestimmt über eine Mechanik den Schwenkwinkel (Exzentrizität) und damit das Hubvolumen der Einheit 10.

Bei Abnahme der Einheiten 10 auf dem Prüfstand vor Auslieferung an den Kunden werden beide Schwenkbereiche durchfahren und das Drehmoment quasi statisch gemessen in Abhängigkeit vom Betriebsdruck mit der Drehzahl als Parameter. Über eine geeignete Elektronik werden die Kurven begradigt. Bei Drehmomentregelungen wird von der Elektronik in Abhängigkeit von Drehzahl und Betriebsdruck die entsprechende Position des Verstellkolbens ausgegeben.

Damit ist die sekundärgeregelte - drehzahlgeregelte - Achse ohne zusätzliche mechanische Bauteile auch für Drehmomentregelungen d. h. hier Drehmomentsteuerung im hochdynamischen Bereich geeignet. Wegen fehlender Massenträgheitsmomente ist die Genauigkeit hinreichend gut. Eine Drehmomentmeßnabe ist wie schon bemerkt nicht mehr erforderlich.

Die Figuren 8 und 9 zeigen Kennlinien wie sie bei der digitalen Lösungsmöglichkeit verwendet werden.

**Patentansprüche**

1. Schaltungsanordnung zur Drehmomentsteuerung einer hydrostatischen Maschine (10a) an einem Hydrauliksystem mit eingeprägtem Betriebsdruck,

mit einem mit dem Schwenkwinkel bzw. der Exzentrizität gekoppelten Geber (21) zur Darstellung des Hubvolumenistwertes der Maschine (10a), und

mit einem willkürlich einstellbaren Drehmomentsollwert, der ein Regelsignal zum Betätigen eines Stellgliedes (20) erzeugt, welches das das Drehmoment bestimmende Hubvolumen der Maschine (10a) unter Berücksichtigung der Betriebsparameter wie Druck, Drehzahl und Temperatur verändert, wobei der Schwenkwinkel $\alpha$ (die Exzentrizität E) analog oder digital gemessen wird und

der Sollwert des Schwenkwinkels $\alpha = \frac{M}{P}$ (oder der Exzentrizität $E = \frac{M}{P}$ ) errechnet wird (analoge Lösung), oder aber die ausgegebene Spannung für die Schwenkwinkel- bzw. Exzentritätsvorgabe aus "vorher" festgelegten Meßwerten (digitale Lösung) bestimmt wird.

2. Schaltungsanordnung nach Anspruch 1, dadurch gekennzeichnet, daß der Drehmomentsteuerung ein Drehzahlgrenzwert überlagert ist, der bei einem Fehlverhalten der Maschine (10a) nicht überschritten werden kann.

3. Schaltungsanordnung nach Anspruch 1 oder 2 dadurch gekennzeichnet, daß die vorher festgelegten Meßwerte abgespeichert sind.

4. Schaltungsanordnung nach einem der Ansprüche 1 bis 3, dadurch gekennzeichnet, daß das Regelsignal zum Betätigen des Stellgliedes der Schwenkwinkelsollwert bzw. der Exzentrizitätssollwert ist und zur Ansteuerung von Ventilmitteln (25) dient, die zum Betätigen des Stellgliedes (20) dienen.

5. Schaltungsanordnung nach einem oder mehreren der vorhergehenden Ansprüchen, dadurch gekennzeichnet, daß der an das Stellglied (20) angelegte Schwenkwinkel- oder Exzentrizitäts-Sollwert ein korrigierter Sollwert ist, beispielsweise. hinsichtlich der Eigenverluste der Maschineneinheit (10).

6. Schaltungsanordnung nach einem oder mehreren der vorhergehenden Ansprüchen, dadurch gekennzeichnet, daß die Maschineneinheit (10) eine oder mehrere hydrostatische Maschinen (10a, 10b) mit axialer und/oder radialer Kolbenanordnung aufweist

FIG.1

FIG.2

FIG.3

FIG.1a

101 BELASTUNGSMASCHINE
102 NETZ-AGGREGATE
103 ZWISCHENGETRIEBE
104 DREHZAHLGEBER
105 PRUEFLING, VERBRENNUNGSMOTOR

106 DROSSELKLAPPEN-VERSTELLGERAET
107 SICHERHEITSVENTIL
108 SPEISEPUMPE
109 SPEISEDRUCKVENTIL

110 ASYNCHRON-MASCHINE P = 160 KW
111 NIEDERDRUCK
112 HOCHDRUCK
113 ELEKTRISCHES NETZ

FIG.4

FIG.5

FIG.6

FIG.7

ANALOGE STANDARD-ACHSE FUER SEKUNDAERREGELUNG MIT A4V

Md-ALPHA-VERLAUF SEKUNDAER-EINHEIT
P = 200 BAR

Md/Nm

R

L

ALPHA

- 1000 1/MIN, RECHTS    - 1000 1/MIN, LINKS        FIG.8

EP 0 616 129 A1

## Md-ALPHA-VERLAUF SEKUNDAER-EINHEIT
## P = 250 BAR

**ALPHA**

- 250 1/MIN, RECHTS   - 250 1/MIN, LINKS   FIG.9

EP 0 616 129 A1

## EINSCHLÄGIGE DOKUMENTE

| Kategorie | Kennzeichnung des Dokuments mit Angabe, soweit erforderlich, der maßgehlichen Teile | Betrifft Anspruch | KLASSIFIKATION DER ANMELDUNG (Int.Cl.5) |
|---|---|---|---|
| A,D | DE-A-28 48 595 (ROBERT BOSCH)<br>* das ganze Dokument *<br>--- | 1 | F04B49/06 |
| A | EP-A-0 497 293 (O&K ORENSTEIN)<br>* Anspruch 1; Abbildung *<br>--- | 1 | |
| A | EP-A-0 404 540 (SHIN CATERPILLAR)<br>* Ansprüche 5-7; Abbildungen *<br>--- | 1 | |
| A | DE-A-36 23 066 (MANNESMANN REXROTH)<br>* Zusammenfassung; Abbildung *<br>----- | 1 | |

RECHERCHIERTE SACHGEBIETE (Int.Cl.5)

F04B

Der vorliegende Recherchenbericht wurde für alle Patentansprüche erstellt

| Recherchenort | Abschlußdatum der Recherche | Prüfer |
|---|---|---|
| DEN HAAG | 7. Juni 1994 | Narminio, A |

EPO FORM 1503 03.82 (P04C03)